**Europäisches Patentamt**

**European Patent Office**

**Office européen des brevets**

(19)

(11) Veröffentlichungsnummer: **0 185 133**

**B1**

(12) **EUROPÄISCHE PATENTSCHRIFT**

(45) Veröffentlichungstag der Patentschrift: **06.02.91**

(21) Anmeldenummer: **85109562.0**

(22) Anmeldetag: **30.07.85**

(51) Int. Cl.⁵: **G 01 S 7/52,** G 01 S 15/10, H 03 K 5/153

(54) **Verfahren und Vorrichtung zum genauen Ermitteln des zeitlichen Abstandes zweier elektrischer Impulse.**

(30) Priorität: **21.12.84 DE 3446837**

(43) Veröffentlichungstag der Anmeldung: **25.06.86 Patentblatt 86/26**

(45) Bekanntmachung des Hinweises auf die Patenterteilung: **06.02.91 Patentblatt 91/06**

(84) Benannte Vertragsstaaten: **FR GB IT**

(56) Entgegenhaltungen:
**DE-A-2 853 170**
**US-A-3 824 464**
**US-A-3 934 458**
**US-A-4 345 168**

(73) Patentinhaber: **Institut Dr. Friedrich Förster Prüfgerätebau GmbH & Co. KG Postfach 925 In Laisen 70 D-7410 Reutlingen 1 (DE)**

(72) Erfinder: **Geweke, Werner Krämerstrasse 19/1 D-7410 Reutlingen (DE)**

Courier Press, Leamington Spa, England.

**Beschreibung**

Die Erfindung betrifft ein Verfahren zum genauen Ermitteln des zeitlichen Abstandes zweier von Ultraschallimpulsen abgeleiteter elektrischer Impulse, bei dem an definierten Bezugspunkten der beiden Impulse eine Zeitmessung begonnen bzw. beendet wird, gemäß dem Oberbegriff von Patentanspruch 1. Die Erfindung betrifft ferner eine Vorrichtung zur Ausführung des Verfahrens.

Bei den hier angesprochenen Ultraschallimpulsen handelt es sich im allgemeinen um Echoimpulse, deren zeitliche Abstände festzustellen sind, um daraus bei bekannter Laufzeit der Echos und gegebener Schallgeschwindigkeit die geometrischen Abstände der Echoursachen, z.B. der Vorder- und Rückwand eines Gegenstandes, zu bestimmen. Die Zeitmessung wird meist su ausgeführt, daß man über eine Torschaltung Taktimpulse bekannter Frequenz an den Eingang eines Zählers le. Die Torschaltung wird an einem Bezugspunkt des ersten Impulses geöffnet und an einen entsprechenden Bezugspunkt des zweiten Impulses geschlossen, so daß die vom Zähler gezählten Taktimpulse ein Maß für den zeitlichen Abstand der beiden Bezugspunkte bilden. Die größte Schwierigkeit bei diesem Verfahren besteht bekanntermaßen darin, die Bezugspunkte eindeutig und sicher festzulegen. Das hat seine Ursache u.a. in den starken Schwankungen, denen die Amplituden der Impulse unterworfen sein können. Im allgemeinen definiert, man solche Bezugspunkte, indem man die zu vermessenden Impulse an eine Spannugnsschwelle führt. Der Zeitpunkt des Über- oder Unterschreitens dieser Schwelle ergibt dann den gewünschten Bezugspunkt. Von Nachteil ist dabei, daß bei gegebener endlicher Flankensteilheit der Impulse die Amplitude der Impulse einen Einfluß auf den Zeitpunkt des Schwellendurchgangs hat und damit die erzielbare Meßgenauigkeit begrenzt. Um diesem Nachteil zu begegnen, wird in DE—OS 2853170 vorgeschlagen, statt der starren Schwellen bewegliche einzuführen und deren Höhe vom Spitzenwert der Impulse abzuleiten, zwischen denen die Zeitmessung erfolgen soll. Damit die Impulse mit den so gewonnenen Schwellen verglichen werden können, ist es einerseits nötig, die Schwellenwerte eine Zeitlang zu speichern, andererseits, die Impulse zu verzögern. Dabei muß man jedoch in Kauf nehmen, daß Änderungen der Verzögerungszeit ins Meßergebnis eingehen können.

Die Erfindung macht sich demgegenüber zur Aufgabe ein Verfahren gemäß dem eingangs angegebenen und eine Vorrichtung zur Durchführung dieses Verfahrens zu schaffen, bei denen eine feste Schwelle zur Definition der Bezugspunkte benutzt wird, ohne daß der oben genannte Nachteil eintritt.

Diese Aufgabe wird gelöst durch ein Verfahren, das gemäß Anspruch 1 und durch eine Vorrichtung die gemäß Anspruch 6 gekennzeichnet ist. Mit der erfindugsgemäßen Lösung ergeben sich bemerkenswerte Vorteile. Von besonderer Bedeutung ist, daß die Bezugspunkte für die Zeitmessung durch Nulldurchgänge des Impulssignals festgelegt sind. Zum einen besteht hier die größte Flankensteilheit des Signales, zum anderen die geringste Abhängigkeit der zeitlichen Lage des Bezugspunktes von der Impulshöhe. Durch die mehrfache Koinzidenz ergibt sich eine gute Störsignalunterdrückung. An unterschiedliche Signalformen kann man sich durch entsprechende Wahl der Parameter anpassen. In einigen Unteransprüchen sind vorteilhafte Ausgestaltungen der Erfindung angeführt.

Im folgenden wird die Erfindung anhand von Figuren durch Ausführungsbeispiele näher erläutert. Es zeigen im einzelnen:

Figure 1 eine Meßeinrichtung für Ultraschallimpulse

Figure 2 eine Triggerschaltung zur Meßeinrichtung

Figure 3 Impulsdiagramme zu Fig. 2

Figure 4 eine erweiterte Triggerschaltung

Figure 5 Impulsdiagramme zu Fig. 4

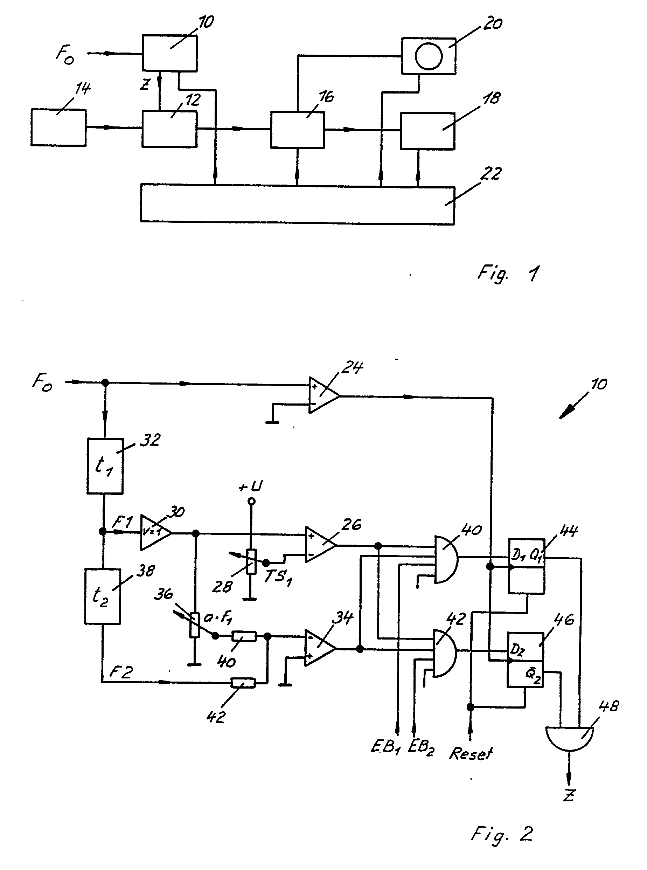

In Figur 1 ist das Blockschaltbild einer Meß- und Auswerteeinrichtung wiedergegeben, wie sie üblicherweise in Ultraschallmeßgeräten verwendet wird. Darin ist eine Triggerschaltung 10 vorgesehen, an deren Eingang die in einem hier nicht dargestellten Ultraschallgeber gewonnenen Impulssignale $F_0$ liegen und die weiter untern näher beschrieben werden soll. Hier nur soviel, daß in ihr aus dem Impulssignal $F_0$ ein Zeitwertimpuls Z hergestellt wird, dessen Länge den Abstand zweier Impulse entspricht, etwa der Echoimpulse von Vorder- und Rückwand eines Prüfteils, dessen Wandstärke bestimmt werden soll. Mit dem Zeitwertimpuls Z wird eine Torschaltung 12 geöffnet oder geschlossen, an deren Eingang die Taktimpulse eines Taktimpulsgenerators 14 liegen und deren Ausgang mit dem Zähleingang eines Impulszählers 16 verbunden ist. Die Ausgänge des letzteren führen zu einer Auswerteschaltung 18 und zu einer Anzeigeeinrichtung 20. Der Ablauf des Meßvorganges wird gesteuert von einer Ablaufsteuerung 22, die jeweils an Triggerschaltung 10, Impulszähler 16, Auswerteschaltung 18 und Anzeigeeinrichtung 20 angeschlossen ist.

Figure 2 zeigt Einzelheiten einer Triggerschaltung 10, deren Aufgaben wie folgt umrissen werden können:

a) Erzeugen eines Nulldurchgangssignales,

b) Ableiten eines um die Zeit $t_1$ gegen das Impulssignal $F_0$ verzögerten Impulssignales $F_1$, Vergleich des letzteren mit einer Triggerschwelle und Erzeugen eines entsprechenden Triggersignales,

c) Ableiten eines um die Zeit $t_2$ gegen das Impulssignal $F_1$ verzögerten Impulssignales $F_2$, Herstellen eines zum Impulssignal $F_1$ proportionalen Impulssignales $a.F_1$, Addieren der Impulssignale $F_2$ und $a.F_1$ und Bilden eiens Vergleichssignales durch Vergleichen der Summe $F_2+a.F_1$ mit Null,

d) Verknüpfen der unter a) bis c) gewonnenen Signale miteinander zum Zeitwertsignal Z.

Der Realisierung von Punkt a) dient ein Nullpunktkomparator 24, der aus einem Operationsverstärker bestehen kann, an dessen invertierendem Eingang das Impulssignal $F_0$ und an dessen nicht invertierendem Eingang das Massepotential Null liegt. Punkt b) wird realisiert durch einen Triggerschwellenkomparator 26, ein Stellglied 28, einen Trennverstärker 30 und eine Laufzeitglied 32. Der Triggerschwellenkomparator 26 besteht aus einem Operationsverstärker, an dessen invertierenden Eingang der Ausgang des Stellgliedes 28 und an dessen nicht invertierenden Eingang der Ausgang des Trennverstärkers 30 geführt ist. Als Stellglied 28 benutzt man ein Potentiometer, das gegen Masse mit einer positiven Spannung +U beaufschlagt ist. Der Trennverstärker 30 dient lediglich zur Entkopplung und kann die Verstärkung V=1 aufweisen. Sein Eingang ist mit dem Ausgang des Laufzeitgliedes 32 verbunden, das das an seinem Eingang liegende Impulssignal $F_1$ um die Zeit $t_1$ verzögert. Die Realisierung von Punkt c) geschieht über einen Verhältniskomparator 34, einen Verhältnissteller 36 zum Einstellen eines Faktors a und ein Laufzeitglied 38. Als Verhältniskomparator 34 arbeitet wiederum ein Operationsverstärker, dessen nicht invertierender Eingang am Massepotential liegt. Sein invertierender Eingang ist über Summationswiderstände 40 und 42 an den Ausgang des Verhältnisstellers 36 oder des Laufzeitgliedes 38 angeschlossen. Als Verhältnissteller 36 fungiert im Normalfall ein Potentiometer. Es sind jedoch auch andere Lösungen denkbar, z.B. ein Verstärker, wenn der Faktor a größer als 1 sein soll. Der Verhältnissteller 36 ist eingangsseitig mit dem Impulssignal $F_1$ am Ausgang des Trennverstärkers 30 verbunden und liefert an seinem Ausgang das Signal $a.F_1$. Das Laufzeitglied 38 verzögert das an seinem Eingang liegende Impulssignal $F_1$ vom Ausgang des Laufzeitgliedes 32 um die Zeit $t_2$. Zur Realisierung von Punkt d) sind zwei Und-Gatter 40, 42, zwei bistabile Schaltstufen 44, 46 sowie ein weiteres Und-Gatter 48 vorgesehen. Je zwei Eingänge der Und-Gatter 40, 42 sind jeweils mit den Ausgängen der beiden Komparatoren 26 oder 34 verbunden, ein dritter Eingang der Und-Gatter 40, 42 mit den Signalen des Signalerwartungsbereiches $EB_1$ oder des Signalerwartungsbereiches $EB_2$, deren Herstellung dem Fachmann geläufig ist und die daher nicht dargestellt ist. Die Ausgänge der Und-Gatter 40, 42 sind jeweils an die vorbereitenden Eingänge $D_1$ oder $D_2$ der bistabilen Schaltstufen 44, 46 geführt, während an den beiden Setzeingängen der Schaltstufen 44, 46 das Ausgangssignal des Nullkomparators 24 liegt. Die Ausgänge $Q_1$ und $Q_2$ der Schaltstufen 44, 46 sind an Eingängen des Und-Gatters 48 angeschlossen.

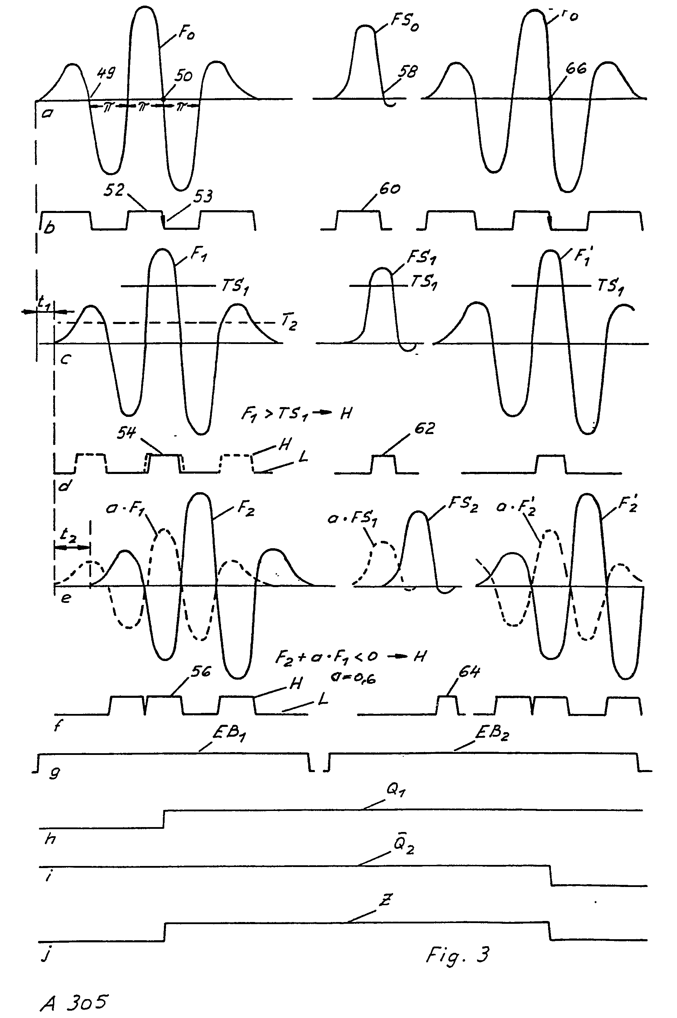

Zum Verständnis der Arbeitsweise der beschriebenen Triggerschaltung 10 nach Figur 2 sollen die Impulsdiagramme nach Figur 3 verhelfen. Figur 3 a zeigt links das Impulssignal $F_0$, dessen Nulldurchgänge im wesentlichen gleiche Abstände π aufweisen und dessen Nulldurchgang 50 als Bezugspunkt ausgewählt werden soll. Aus Figur 3b ist das zugehörige Ausgangssignal 52 des Nulldurchgangskomparators 24 zu ersehen.

Impulssignal $F_1$ nach Fig. 3c ist gegenüber $F_0$ um eine Zeit verzögert, die im vorliegenden Beispiel $t_1=\pi/2$ betragen soll. Am Ausgang des Triggerschwellenkomparators 26 ergibt sich auf Grund der positiven Triggerschwelle $TS_1$, deren Höhe durch das Potentiometer 28 eingestellt werden kann, ein Signal 54 gemäß Figur 3d. Der in die Zeit des H-Zustandes des Signals 54 fallende Nulldurchgang 50 des Impulssignals $F_0$ geht dem nach zwangsläufig von positiver nach negativer Polarität und folgt einem Spitzenwert der mindestens so groß ist wie der Schwellenwert $TS_1$. Damit ist eine eindeutige Selektion des Nulldurchganges 50 aus Nulldurchgänges des Impulssignals $F_0$ möglich. Wäre der wesentlich niedrigere Schwellenwert $TS_2$ eingestellt, so würden in Figur 3d die gestrichelten Linien gelten. Eine eindeutige Selektion des Nulldurchganges 50 wäre nicht mehre möglich. Vielmehr würde bereits der erste Nulldurchgang 40 von $F_0$ mit dem H-Zustand des Triggerschwellenkomparators 26 zusammenfallen. Das um eine zusätzliche Zeit, vorzugsweise $t_2=\pi$, verzögerte Impulssignal $F_2$ und das gestrichelt gezeichnete Impulssignal $a.F_1$ gemäß Figure 3a ermöglichen die für diesen Fall notwendige weitere Selektionsbedingung. Sie lautet: $F_2+a.F_1<0$. In unserem Ausführungsbeispiel erhielt der durch Potentiometer 36 einstellbare Faktor, mit dem das Impulssignal $F_1$ zu multiplizieren ist, den Wert $a=0,6$. Der Vergleich des Summensignales $F_2+a.F_1$ mit dem Nullpotential findet im Verhältniskomparator 34 statt. Als Ergebnis des Vergleichs zeigt Figur 3f das Signal 56 am Ausgang des Verhältniskomparators 34. Der Nulldurchgang 50 des Impulssignals $F_0$ fällt mit dem H-Zustand des Signals 56 wie auch des Signals 54 zusammen. Dagegen weist das Signal 56 während des ersten Nulldurchgangs 49 des Impulssignals $F_0$ den L-Zustand auf.

Rechts von Impulssignal $F_0$ in Figure 3a ist ein mögliches Störsignal $FS_0$ am Eingang der Triggerschaltung 10 mit einem Nulldurchgang 58 dargestellt. Figure 3b zeigt die zugehörige Ausgangsspannung 60 des Nullkomparators 24. Das um die Zeit $t_1$ gegenüber $FS_0$ verzögerte Störsignal $FS_1$ nach Figure 3c überschreitet die Schwelle $TS_1$ und verursacht am Ausgang des Triggerschwellenkomparators 26 ein Signal 62, dessen H-Zustand mit dem Nulldurchgang 58 des Störsignals $FS_0$ zusammenfällt und eine Verfälschung des Meßergebnisses bewirken könnte, wenn nicht die zuvor beschriebene zusätzliche Selektionsbedingung vorgesehen wäre. In Figure 3e sind das um die Zeit $t_2$ verzögerte Impulssignal $FS_2$ und das $FS_1$ proportionale Impulssignal $a.FS_1$ (gestrichelt) abgebildet. Das darunter gezeichnete Signal 64 am Ausgang des Verhältniskomparators 34 zeigt für den Zeitpunkt des Nulldurchganges 58 des Störimpulses $FS_0$ keinen H-Zustand, weil die Selektionsbedingung $F_2+a.F_1<0$ zu diesem Zeitpunkt nicht erfüllt ist.

Auf der linken Seite der Figuren 3a bis 3f sind das Impulssignal $F_0$ und die davon abgeleiteten Signale dargestellt, die den Start der Zeitmessung im Augenblick des Nulldurchganges 50 von $F_0$

herbeiführen sollen und die als Echoimpuls von der Vorderseite eines zu messenden Gegenstandes herrühren können. Auf der rechten Seite der Figuren 3a bis 3f stehen ihnen das Impulssignal $F_0$ und entsprechend dem zuvor Beschriebenen davon abgeleiteten Signale gegenüber, die den Abschluß der Zeitmessung im Augenblick des Nulldurchganges bestimmen sollen. In Figure 3g sind die Erwartungsbereichssignale, die an Eingängen der Und-Gatter 40 oder 42 liegen, wiedergegeben. Der für den Start der Zeitmessung maßgebliche Nulldurchgang 50 des Impulssignales $F_0$ fällt in den Erwartungsbereich $EB_1$, der für den Abschluß der Zeitmessung maßgebliche Nulldurchgang 66 des Impulssignales $F_0'$ in den Erwartungsbereich $EB_2$. Der Ausgang $Q_1$ der Schaltstufe 44 wird gemäß Figur 3h von der steilen Flanke 53 des Signals 52 gesetzt, wenn durch Erwartungsbereichssignal $EB_1$ und die Signale 54 und 56 an allen Eingängen des Und-Gatters 40 und damit am $D_1$-Eingang der Schaltstufe 44 H-Zustand herrscht. Der Ausgang $\bar{Q}_2$ der Schaltstufe 46 wird gemäß Figure 3i durch ein entsprechendes Nulldurchgangssignal des Impulssignales $F_0$ zurückgesetzt, wenn durch Erwartungsbereichssignal $EB_2$ und die Signale 54 und 56 an allen Eingängen des Und-Gatters 42 und damit auch am $D_2$-Eingang der Schaltstufe 46 H-Zustand vorliegt. Damit ist über das Und-Gatter 48 exakt Beginn und Ende des Zeitwertsignals Z gemäß Figur 3j gegeben. Das Zurücksetzen der beiden Schaltstufen 44, 46 in die Ausgangsstellung kann über den Reset-Eingang vor jedem Meßvorgang erfolgen.

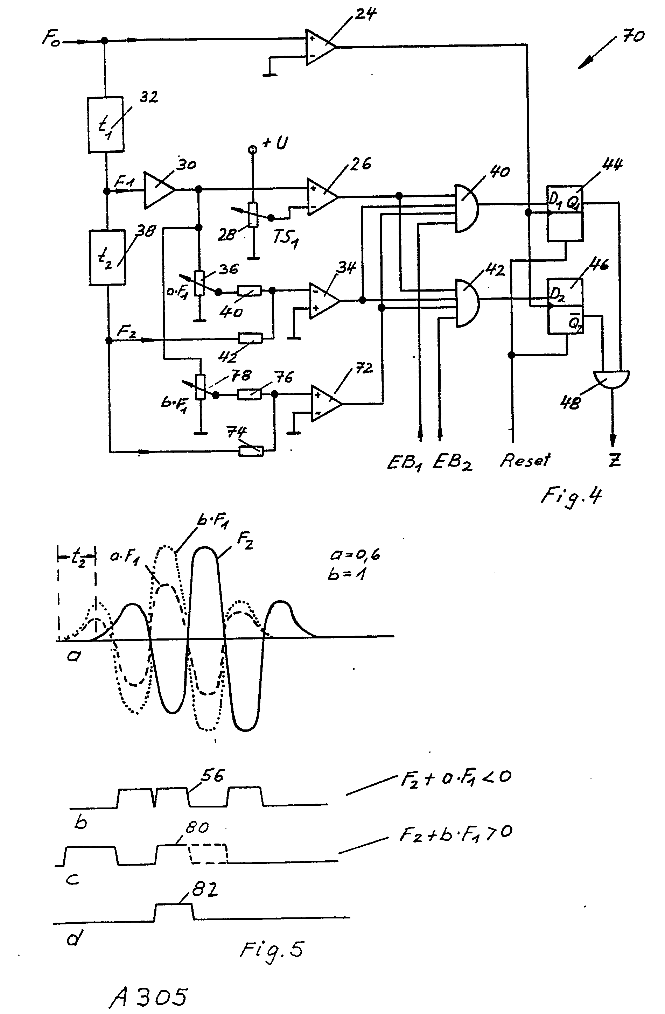

Durch nochmaliges Hinzufügen einer Selektionsbedingung kann in bestimmten Fällen die Unterdrückung von Störsignalen weiter verbessert werden. Eine solche Selektionsbedingung kann lauten: $F_2+b.F_1>0$. In Figur 4 ist eine Triggerschaltung 70 realisiert, in der diese Selektionsbedingung zusätzlich vorgesehen ist. Da diese weitgehend der Triggerschaltung 10 entspricht, sind zum großen Teil die gleichen Bezugsziffern verwendet worden wie in Figur 2. Im nachfolgenden werden, um Wiederholungen zu vermeiden, nur die Bestandteile der Triggerschaltung 70 beschrieben, die neu hinzugekommen sind. Neben die bisherigen Komparatoren 24, 26, 34 tritt ein weiterer Verhältniskomparator 72. Sein Ausgang ist mit je einem Eingang der Und-Gatter 40, 42 verbunden. Sein invertierender Eingang liegt am Massepotential Null, wohingegen sein nicht invertierender Eingang einerseits über einen Summationswiderstand 74 an den Ausgang des Laufzeitgliedes 38 angeschlossen ist, andererseits über einen Summationswiderstand 76 an den Ausgang eines Verhältnisstellers 78, mit dem das Verhältnis b einzustellen ist und dessen Eingang zu diesem Zweck Ausgang des Trennverstärkers 30 gespeist wird. Im Ausführungsbeispiel dient als Verhältnissteller 78 ein Potentiometer. Für einen Faktor b>1 kann statt dessen auch z.B. ein Verstärker eingesetzt sein. Während am Ausgang des Verhältniskomparators 34 der H-Zustand erzielt wird, wenn die Summe $F_2+a.F_1$ das Potential Null unterschreitet, ergibt sich am Ausgang des Verhältniskomparators 72 der H-Zustand, wenn die Summe $F_2+b.F_1$ das Potential Null überschreitet.

In Figur 5a ist das um die Zeit $t_2$ gegenüber $F_1$ verzögerte Impulssignal $F_2$ neben den Impulssignalen $a.F_1$ (gestrichelt) und $b.F_1$ (punktiert) dargestellt. Dabei wurde wie in Figure 3e für Steller 36 a=0,6 gewählt, während für Steller 78 b=1 festgesetzt wurde. Nach Summation und Nullvergleich ergibt sich am Ausgang des Verhältniskomparators 34 gemäß Figur 5b ein Signal 56, das dem von Figure 3f entspricht. Ebenso erhält man am Ausgang des Verhältniskomparators 72 ein Signal 80 gemäß Figur 5c. Bei diesem ist im Bereich 81 (gestrichelt) eine eindeutige Signalaussage nicht möglich, da hier $F_2$ und $b.F_1$ praktisch gleiche Werte einnehmen. Verknüpft man die Signale 56 und 80 miteinander, wie dies ja in den Und-Gattern 40 oder 42 geschieht, so ergibt sich ein Signal 82 gemäß Figur 5d, bei dem sich in eindeutiger Weise ein H-Zustand nur in der Umgebung des Nulldurchganges 50 des Impulssignales $F_0$ einstellt. Damit ist eine sichere Auswahl des gewünschten Nulldurchganges gewährleistet.

In manchen Fällen hat es sich als zweckmäßig herausgestellt, für die beidem Erwartungsbereiche $EB_1$ und $EB_2$ unterschiedliche Parameter vorliegen zu lassen. So kann man beispielsweise durch einfache schaltungstechnische Maßnahmen gleichzeitig mit dem Umschalten der Erwartungsbereiche auch die Einstellung der Schwelle $TS_1$ oder der Verhältnisse a beziehungsweise b umschalten. Dies kann geschehen indem die entsprechenden Stellglieder 28, 36 und 78 zweifach mit jeweils unterschiedlicher Einstellung vorgesehen sind und abwechselnd eingeschaltet sind. Ebenso kann man auch die Polarität des Impulssignales $F_0$ beim Wechsel der Erwartungsbereiche umschalten, damit in beiden Erwartungsbereichen entsprechende Impulsverläufe vorliegen, wenn durch Echobildung eine Polumkehr stattgefunden hat.

Statt, wie im zuvor beschriebenen Beispiel, einen Nulldurchgang von positiver zu negativer Polarität auszuwählen, kann auch der umgekehrte Fall praktiziert werden. Dann erhält die Triggerschwelle $TS_1$ negatives Potential und am nachfolgenden Komparator werden die Eingänge vertauscht. Natürlich wird auf eine geänderte Einstellung der Verhältnisstellen 36, 78 notwendig.

Bei den bisherigen Betrachtungen ist immer davon ausgegangen worden, daß der erste der beiden für die Zeitmessung maßgeblichen Impulse aus dem Echoimpuls von der Vorderseite eines zu messenden Gegenstandes gewonnen wird. In manchen Fällen, insbesondere bei einfachen Meßgeräten, wird der Ultraschallgeber unmittelbar auf die zu messende Wand aufgesetzt und wird als Impuls für die Zeitmessung der Startimpuls benutzt, mit dem der Ultraschallgeber beaufschlagt wird. In diesen Fällen ist für den ersten Impuls naturgemäß kein Erwartungsbereichssignal notwendig und sinnvoll. Andererseits muß hier für die genaue Dimensionsmessung ein fester Korrekturbetrag berücksichtigt werden, der von der ermittelten Zeit abzuziehen ist. Da aber auch hier wichtig ist, daß vom zweiten Impuls ein eindeutiger Bezugspunkt vorliegt, lassen sich das zuvor beschriebene Verfahren und die entsprechenden Vorrichtungen auch in solchen Fällen nutzbringend einsetzen.

**Patentansprüche**

1. Verfahren zum genauen Ermitteln des zeitlichen Abstandes zweier von Ultraschallimpulsen abgeleiteter elektrischer Impulse, bei dem an definierten Bezugspunkten der beiden Impulse eine Zeitmessung begonnen bzw. beendet wird, wobei die beiden Impulse zumindest jedoch der zuletzt auftretende, jeweils innerhalb eines Signalerwartungsbereiches liegen und wobei die Impulse jeweils in einem Impulssignal $F_0$ enthalten sind, das Nulldurchgänge mit weitgehend gleichbleibender Halbperiode aufweist, dadurch gekennzeichnet, daß zur Zeit dieser beiden Bezugspunkte, zumindest jedoch zur Zeit des zuletzt auftretenden Impulses, die folgende Bedingungen erfüllt sind:

a) das die Impulse enthaltende unverzögerte Impulssignal $F_0$ durchschreitet, von einer bestimmten Polarität kommend, den Nullpunkt;

b) ein um die Zeitspanne $t_1$ gegenüber $F_0$ verzögertes Impulssignal $F_1$ hat zur Zeit des Nulldurchganges eine Triggerschwelle der genannten Polarität überschritten;

c) ein um die Zeitspanne $t_2$ gegenüber $F_1$ verzögertes Impulssignal $F_2$ hat mindestens ein zum Impulssignal $F_1$ proportionale Impulsesignal ($a.F_1$; $b.F_1$) überschritten oder unterschritten.

2. Verfahren nach Anspruch 1, dadurch gekennzeichnet, daß die Länge der Zeitspanne $t_1$ etwa ein Viertel der Period ($\pi/2$), die Länge der Zeitspanne $t_2$ etwa die Hälfte der Period ($\pi$) ausmacht.

3. Verfahren nach Anspruch 1 oder 2, dadurch gekennzeichnet, daß der Vergleich des Impulssignals $F_2$ mit dem zum Impulssignal $F_1$ proportionalen Impulssignal $a.F_1$ durch Addition von $F_2$ und $a.F_1$ herbeigeführt wird, wobei ein Betrag von $<0$ sich ergeben muß, um die o.g. Bedingung c) zu erfüllen.

4. Verfahren nach einem der vorhergehenden Ansprüche, dadurch gekennzeichnet, daß der Vergleich des Impulssignals $F_2$ mit dem zum Impulssignal $F_1$ proportionalen Impulssignal $b.F_1$ durch Addition von $F2$ und $b.F_1$ herbeigeführt wird, wobei ein Betrag von $>0$ sich ergeben muß, um die o.g. Bedingung c) zu erfüllen.

5. Verfahren nach einem der vorhergehenden Ansprüche, dadurch gekennzeichnet, daß die Parameter der Bedingungen für die Bezugspunkte, z.B. die Höhe der Triggerschwelle $TS_1$, der Proportionalitätsfaktor a oder b, unterschiedlich sind, je nachdem ob der jeweilige Bezugspunkt für den Beginn oder das Ende der Zeitmessung maßgeblich ist.

6. Vorrichtung zum Durchführen des Verfahrens nach Anspruch 1,

—mit einer Triggerschaltung (10; 70), an deren Eingang das die Impulse enthaltende Impulssignal $F_0$ liegt und an deren Ausgang ein Zeitabstandssignal Z liegt, das mit dem definierten Bezugspunkt (66) des zweiten Impulses endet,

—mit einem Taktimpulsgenerator (14),

—mit einer Torschaltung (12), deren Steuereingang mit dem Ausgang der Triggerschaltung (10; 70) und deren Eingang mit dem Ausgang des Taktimpulsgenerators (14) verbunden ist,

—mit einer Impulszählerschaltung (16), deren Eingang mit dem Ausgang der Torschaltung (12) verbunden ist, dadurch gekennzeichnet,

daß die Triggerschaltung (10; 70) wie folgt aufgebaut ist:

—Schaltmittel (24) zum Herstellen von Nulldurchgangssignalen (52) in Abhängigkeit von den Impulssignalen $F_0$,

—erste Verzögerungsmittel (32) zum Herstellen eines um die Zeitspanne $t_1$ gegenüber $F_0$ verzögerten Impulssignals $F_1$ sowie eine Schwellenstufe (26; 28), die beim Überschreiten einer Spannungsschwelle ($TS_1$) durch das Impulssignal $F_1$ ein Schwellensignal (54) abgibt.

—zweite Verzögerungsmittel (38) zum Herstellen eine um die Zeitspanne $t_2$ gegenüber $F_1$ verzögerten Impulssignals $F_2$, Transformationsmittel (36) zum Herstellen eines mit dem Faktor a multiplizierten Impulssignals $a.F_1$ aus $F_1$ sowie Vergleichsmittel (34) zum Herstellen eines ersten Vergleichssignals (56) aus den Impulssignal $a.F_1$ und $F_2$,

—Verknüpfungsmittel (40; 42; 44; 46; 48) durch die die Nulldurchgangssignale (52), die Schwellensignale (54), die Vergleichssignale (56) und die Erwartungsbereichssignale ($EB_1$, $EB_2$) zur Bildung des Zeitabstandssignals Z miteinander verknüpft sind.

7. Vorrichtung nach Anspruch 6, dadurch gekennzeichnet, daß

—zusätzlich weitere Transformationsmittel (78) zum Herstellen eines mit dem Faktor b multiplizierten Impulssignals $b.F_1$ aus $F_1$ vorgesehen sind,

—weitere Vergleichsmittel (72) zum Herstellen eines zweiten Vergleichssignals (80) aus den Impulssignalen $b.F_1$ und $F_2$ vorgesehen sind,

—die Nulldurchgangssignale (52), die Schwellensignale (54) und die ersten sowie zweiten Vergleichssignale (56; 80) durch Verknüpfungsmittel (40; 42; 44; 46; 48) zur Bildung eines Zeitabstandssignal Z miteinander verknüpft sind.

8. Vorrichtung nach Anspruch 6 oder 7, dadurch gekennzeichnet, daß

—die Schwellensignal (54) und die Vergleichssignale (56; 80) jeweils an Eingänge eines ersten (40) oder eines zweiten (42) Und-Gatters gelegt werden,

—zusätzlich an Eingängen des ersten (40) und zweiten (42) Und-Gatters erste oder zweite Erwartungsbereichssignale ($EB_1$, $EB_2$) liegen,

—die Ausgänge des ersten (40) und zweiten (42) Und-Gatters mit den vorbereitenden Eingängen einer ersten (44) oder einer zweiten (46) bistabilen Schaltstufe verbunden sind,

—an den Setzeingängen der ersten (44) und zweiten (46) bistabilen Schaltstufe die Nulldurchgangsimpulse (52) liegen,

—der Q-Ausgang der ersten bistabilen Schaltstufe (44) und der Q̄-Ausgang der zweiten bistabilen Schaltstufe (46) über ein weiteres Und-Gatter (48) miteinander verknüpft sind.

9. Vorrichtung nach Anspruch 8, dadurch gekennzeichnet, daß

—die Erwartungsbereichssignale ($EB_1$, $EB_2$) eine Umschaltung des Schwellenwertes der Schwellenstufe (26; 28), des Faktors a und/oder b der Transformationsmittel (36; 78) und/oder der Polarität der Impulssignale $F_0$ am Eingang der Triggerschaltung (10; 70) bewirken.

## Revendications

1. Procédé pour déterminer avec précision l'intervalle de temps séparant deux impulsions électriques dérivées d'impulsions d'ultrasons, dans lequel on commence ou termine une mesure du temps à des points de référence définis des deux impulsions, les deux impulsions mais au moins la dernière, se situant chacune à l'intérieur d'un domaine d'attente de signal et les impulsions étant contenues chacune dans un signal d'impulsions ($F_0$) qui présente des passages par zéro avec une demi-période à peu près constante, caractérisé en ce qu'à l'instant de ces deux points de référence, mais au moins à l'instant de la dernière impulsion, les conditions suivantes sont satisfaites:

a) le signal d'impulsions ($F_0$) non temporisé, contenant les impulsions et venant d'une polarité déterminée, passe par le point zéro;

b) un signal d'impulsions ($F_1$), temporisé du laps de temps ($t_1$) par rapport à ($F_0$), à dépassé à l'instant du passage par zéro, un seuil de déclenchement de la polarité citée;

c) un signal d'impulsions ($F_2$), temporisé du laps de temps ($t_2$) par rapport à ($F_1$), a dépassé ou est inférieur à au moins un signal d'impulsions ($a.F_1$; $b.F_1$), proportionnel au signal d'impulsions ($F_1$).

2. Procédé selon la revendication 1, caractérisé en ce que la longueur du laps de temps ($t_1$) est à peu près égale à un quart de la période ($\pi/2$), la longueur du lamps de temps ($t_2$) à environ la moitié de la période ($\pi$).

3. Procédé selon la revendication 1 ou 2, caractérisé en ce que la comparaison du signal d'impulsions ($F_2$) et du signal d'impulsions ($a.F_1$), proportionnel au signal d'impulsions ($F_1$), se fait par addition de ($F_2$) et de ($a.F_1$), la somme résultante devant être <0 pour que la condition c) mentionnée ci-dessus soit satisfaite.

4. Procédé selon l'une des revendications précédentes, caractérisé en ce que la comparaison du signal d'impulsions ($F_2$) et du signal d'impulsions ($b.F_1$) proportionnel au signal d'impulsions ($F_1$), se fait par addition de $F_2$ et de $b.F_1$, la valeur résultante devant être >0, pour que la condition c) mentionnée ci-dessus soit satisfaite.

5. Procédé selon l'une des revendications précédentes, caractérisé en ce que les paramètres des conditions pour les points de référence, par exemple la hauteur du seuil de déclenchements $TS_1$, du facteur de proportionnalité a ou b, sont différents, suivant que le point de référence respectif est déterminant pour le début ou la fin de la mesure de temps.

6. Dispositif pour la mise en oeuvre du procédé selon la revendication 1,

—comportant un circuit de déclenchement (10; 70) à l'entrée duquel se trouve le signal d'impulsions $F_0$, contenant les impulsions et à la sortie duquel se trouve un signal d'intervalle de temps Z qui se termine avec le point de référence (66) défini de la deuxième impulsion,

—comportant un générateur d'impulsions (14),

—comportant un circuit de porte (12) dont l'entrée de commande est reliée à la sortie du circuit de déclenchement (10; 70) et dont l'entrée est reliée à la sortie du générateur d'impulsions (14),

—comportant un circuit de compteur d'impulsions (16) dont l'entrée est reliée à la sortie du circuit de porte (12),

caractérisé en ce que le circuit de déclenchement (10; 70) est constitué de la façon suivante:

—des moyens de commutation (24) pour réaliser des signaux de passage par zéro (52) en fonction des signaux d'impulsions $F_0$,

—des premiers moyens de temporisation (32) pour réaliser un signal d'impulsions $F_1$, temporisé du laps de temps $t_1$, par rapport à $F_0$, ainsi qu'un étage de seuil (26; 28) qui délivre un signal de seuil (54) lorsque le signal d'impulsions $F_1$ dépasse un seuil de tension $TS_1$,

—des deuxièmes moyens de temporisation (38) pour réaliser un signal d'impulsions $F_2$, temporisé du laps de temps $t_2$ par rapport à $F_1$, des moyens de transformation (36) pour réaliser un signal d'impulsions $a.F_1$, multiplié par le facteur a, à partir de $F_1$, ainsi que des moyens de comparison (34) pour réaliser un premier signal de comparaisons (56), à partir des signaux d'impulsions $a.F_1$ et $F_2$,

—des moyens d'enchaînement (40; 42; 44; 46; 48) par lesquels les signaux de passage par zéro (52), les signaux de seuil (54), les signaux de comparaison (56) et les signaux de domaine d'attente $EB_1$, $EB_2$ sont enchaînés entre eux pour former le signal d'intervalle de temps Z.

7. Dispositif selon la revendication 6, caractérisé en ce que:

—d'autres moyens de transformation (78) supplémentaires sont prévus pour réaliser un signal d'impulsions $b.F_1$, multiplié par le facteur b, à partir de $F_1$,

—d'autres moyens de comparaison (72) sont prévus pour réaliser un deuxième signal de comparaison (80) à partir des signaux d'impulsions $b.F_1$ et $F_2$,

—les signaux de passage (52), les signaux de seuil (54) et les premiers ainsi que les deuxièmes signaux de comparaison (56; 80) sont enchaînés entre eux par des moyens d'enchaînement (40; 42; 44; 46; 48), pour former un signal d'intervalle de temps Z.

8. Dispositif selon la revendication 6 ou 7, caractérisé en ce que:

—les signaux de seuil (54) et les signaux de comparaison (56; 80) sont appliqués chacun aux entrées d'une première porte ET (40) ou d'une deuxième porte ET (42),

—des premiers ou des deuxièmes signaux de domaine d'attente (EB₁, EB₂) se trouvent en supplément aux entrées de la première porte ET (40) et de la deuxième porte ET (42),

—les sorties de la première porte ET (40) et de la deuxième porte ET (42) sont reliées aux entrées de préparation d'un premier étage de commutation bistable (44) ou d'un deuxième étage de commutation bistable (46),

—les impulsions de passage par zéro (52) se trouvent aux entrées de positionnement du premier étage de commutation bistable (44) et du deuxième étage de commutation bistable (46),

—la sortie Q du premier étage de commutation bistable (44) et la sortie Q̄ du deuxième étage de commutation bistable (46) sont enchaînées entre elles par une autre porte ET (48).

9. Dispositif selon la revendication 8, caractérisé en ce que:

—les signaux de domaine d'attente (EB₁, EB₂) entraînent une commutation de la valeur de seuil de l'étage de seuil (26; 28), du facteur a et/ou b des moyens de transformation (36, 78) et/ou de la polarité des signaux d'impulsions F₀, à l'entrée du circuit de déclenchement (10; 70).

**Claims**

1. Method of precisely determining the time interval between two electric pulses derived from ultrasonic pulses, in which a time measurement is begun and ended at defined reference points of the two pulses, the two pulses, at least, however, that occurring last, being located at any given time within an expected signal range and the pulses being contained at any given time in a pulse signal $F_0$ which has passages through zero with a substantially constant half-period, characterised in that at the time of these two reference points, at least, however, at the time of the pulse occurring last, the following conditions are satisfied:

a) the undelayed pulse signal $F_0$ containing the pulses passes through the zero point, coming from a certain polarity;

b) a pulse signal $F_1$, delayed with respect to $F_0$ by the time interval $t_1$, has exceeded a trigger threshold of the said polarity at the time of the passage through zero;

c) a pulse signal $F_2$, delayed with respect to $F_1$ by the time interval $t_2$, has exceeded or fallen below at least one pulse signal ($a.F_1$; $b.F_1$) proportional to the pulse signal $F_1$.

2. Method according to claim 1, characterised in that the length of the time interval $t_1$ is about one quarter of the period ($\pi/2$), the length of the time interval $t_2$ is about one half of the period ($\pi$).

3. Method according to claim 1 or 2, characterised in that the comparison of the pulse signal $F_2$ with the pulse signal $a.F_1$ proportional to the pulse signal $F_1$ is produced by addition of $F_2$ and $a.F_1$, an amount of $<0$ having to result in order to satisfy the above-mentioned condition c).

4. Method according to any one of the preceding claims, characterised in that the comparison of the pulse signal $F_2$ with the pulse signal $b.F_1$ proportional to the pulse signal $F_1$ is produced by addition of $F_2$ and $b.F_1$, an amount of $>0$ having to result in order to satisfy the above-mentioned condition c).

5. Method according to any one of the preceding claims, characterised in that the parameters of the conditions for the reference points, e.g. the height of the trigger threshold $TS_1$, the proportionality factor $a$ or $b$, are different according to whether the particular reference point is determinative for the beginning or the end of the time measurement.

6. Arrangement for carrying the method according to claim 1 into effect, having

—a trigger circuit (10; 70) at whose input the pulse signal $F_0$ containing the pulses is present and at whose output a time interval signal Z is present which ends with the defined reference point (66) of the second pulse,

—a timing pulse generator (14),

—a gate circuit (12) whose control input is connected to the output of the trigger circuit (10; 70) and whose input is connected to the output of the timing pulse generator (14),

—a pulse counter circuit (16) whose input is connected to the output of the gate circuit (12), characterised in that the trigger circuit (10; 70) is constructed as follows:

—switching means (24) for producing zero passage signals (52) in dependence upon the pulse signals $F_0$,

—first delay means (32) for producing a pulse signal $F_1$ delayed with respect to $F_0$ by the time interval $t_1$, as well as a threshold stage (26; 28) which emits a threshold signal (54) on a voltage threshold ($TS_1$) being exceeded by the pulse signal $F_1$,

—second delay means (38) for producing a pulse signal $F_2$ delayed with respect to $F_1$ by the time interval $t_2$, transformation means (36) for producing from $F_1$ a pulse signal $a.F_1$ multiplied by the factor $a$, and comparison means (34) for producing a first comparison signal (56) from the pulse signals $a$, $F_1$ and $F_2$,

—logic means (40; 42; 44; 46; 48) by which the zero passage signals (52), the threshold signals (54), the comparison signals (56) and the expected range signals (EB₁, EB₂) are combined with one another to form the time interval signal Z.

7. Arrangement according to claim 6, characterised in that

—in addition, further transformation means (78) are provided for producing from $F_1$ a pulse signal $b.F_1$ multiplied by the factor $b$,

—further comparison means (72) for producing a second comparison signal (80) from the pulse signals $b.F_1$ and $F_2$ are provided,

—the zero passage signals (52), the threshold signals (54) and the first and the second comparison signals (56; 80) are combined with one another by logic means (40; 42; 44; 46; 48) to form a time interval signal Z.

8. Arrangement according to claim 6 or 7, characterised in that

—the threshold signals (54) and the comparison signals (56; 80) are applied in each case to inputs of a first AND gate (40) or of a second AND gate (42),

—in addition, first or second expected range signals ($EB_1$, $EB_2$) are present at inputs of the first AND gate (40) and the second AND gate (42),

—the outputs of the first AND gate (40) and the second AND gate (42) are connected to the preparatory inputs of a first bistable switching stage (44) or of a second bistable switching stage (46),

—the zero passage pulses (52) are present at the set inputs of the first bistable switching stage (44) and the second bistable switching stage (46),

—the Q output of the first bistable switching stage (44) and the $\bar{Q}$ output of the second bistable switching stage (46) are combined with one another by way of an additional AND gate (48).

9. Arrangement according to claim 8, characterised in that

—the expected range signals ($EB_1$, $EB_2$) efefct a changeover of the threshold value of the threshold stage (26; 28), of the factor $a$ and/or $b$ of the transformation means (36; 78) and/or of the polarity of the pulse signals $F_0$ at the input of the trigger circuit (10; 70).

Fig. 1

Fig. 2

Fig. 3

A 305

2

Fig.4

$a = 0,6$
$b = 1$

$F_2 + a \cdot F_1 < 0$

$F_2 + b \cdot F_1 > 0$

Fig.5

A 305

3